# DEMANDE DE BREVET EUROPEEN

(11) **EP 4 325 353 A1**
(43) Date de publication de la demande: **21.02.2024**
(21) Numéro de dépôt: 23191789.9
(22) Date de dépôt: 16.08.2023
(51) Int. Cl.: G06F 9/4401, B61L 27/00, G06F 8/60, G06F 9/445, B61L 15/00, B61L 27/53

(54) **SYSTÈME ET PROCÉDÉ DE DÉPLOIEMENT D'UN LOGICIEL DANS UN SYSTÈME ÉLECTRONIQUE D'UN MATÉRIEL FERROVIAIRE**

(30) Priorité: 17.08.2022 FR 2208330
(71) Demandeur: ALSTOM Holdings, 93400 Saint-Ouen-sur-Seine (FR)
(72) Inventeur: DEGENEVE, Xavier, 69003 Lyon (FR); AUBERT, Jean-Philippe, 69008 Lyon (FR)
(74) Mandataire: Lavoix

(57) **Abrégé**

L'invention concerne un système et un procédé de déploiement d'un logiciel dans un système électronique d'un matériel ferroviaire. Le système comporte un matériel ferroviaire , au moins un dispositif de stockage de données (4) et au moins un dispositif électronique (6), le dispositif de stockage de données étant fixé au matériel ferroviaire, le dispositif de stockage de données comportant un logiciel (22) enregistré en mémoire pour assurer une ou plusieurs fonctions du matériel ferroviaire, le dispositif électronique étant fixé de façon amovible au matériel ferroviaire et étant connecté au dispositif de stockage de données par un connecteur de données (8), le dispositif électronique étant configuré pour charger le logiciel depuis le dispositif de stockage lors du démarrage du dispositif électronique.

## Description

### DOMAINE TECHNIQUE

La présente divulgation concerne le déploiement de logiciels embarqués dans un système électronique d'un matériel ferroviaire.

### ARRIERE-PLAN TECHNOLOGIQUE

Dans les matériels ferroviaires connus, tant dans les véhicules ferroviaires eux-mêmes que dans des équipements fixes, tels des équipements de voie ou de signalisation, il est courant qu'un système électronique embarqué soit utilisé pour piloter et/ou superviser tout ou partie des fonctions du matériel.

Par exemple, ces systèmes électroniques embarqués comportent un processeur et sont capables d'exécuter un programme informatique contenu dans un logiciel embarqué pour mettre en oeuvre tout ou partie des fonctions du matériel.

Ces systèmes électroniques peuvent être installés sur une carte électronique associée au matériel.

Le logiciel embarqué est généralement stocké dans une mémoire informatique intégrée dans le système embarqué, car cela permet de bénéficier de temps d'accès plus rapide que si le logiciel embarqué était stocké dans un support extérieur au système embarqué.

Au cours de la vie de l'équipement, il est courant que plusieurs versions successives du logiciel embarqué soient développées. Compte tenu des spécificités et des exigences propres au domaine ferroviaire, notamment en terme de normes de sécurité, il est important que la bonne version du logiciel embarqué soit installée sur le système électronique en fonction de l'application pour laquelle le système électrique, et par extension le matériel ferroviaire, a été prévu ou validé.

Un problème peut notamment se poser lorsque le système électronique embarqué doit être remplacé, par exemple suite à un dysfonctionnement du système ou du matériel ferroviaire.

Il est courant que, pour des raisons pratiques et/ou économiques, les systèmes électroniques de remplacement disponibles en stock et/ou sortis d'usine possèdent une version du logiciel embarqué qui est différente de celle qui est nécessaire pour que l'équipement puisse fonctionner correctement.

Il faut donc, le plus souvent, procéder manuellement à une mise à jour du logiciel embarqué. Cela implique une organisation coûteuse à mettre en place, pour identifier et suivre les différentes versions installées sur les différents systèmes électroniques disponibles en réserve et/ou en service. De plus, des considérations de sécurité informatique viennent s'ajouter et qui doivent être respectées pour ne pas mettre en danger la sécurité du matériel ferroviaire.

C'est à ces inconvénients qu'entend plus particulièrement remédier l'invention en proposant un procédé et un système de déploiement d'un logiciel dans un système électronique embarqué d'un matériel ferroviaire.

### RESUME DE L'INVENTION

L'invention concerne un système comportant un matériel ferroviaire, au moins un dispositif de stockage de données et au moins un dispositif électronique, le dispositif de stockage de données étant fixé au matériel ferroviaire, le dispositif de stockage de données comportant un logiciel enregistré en mémoire pour assurer une ou plusieurs fonctions du matériel ferroviaire, le dispositif électronique étant fixé de façon amovible au matériel ferroviaire et étant connecté au dispositif de stockage de données par un connecteur de données, le dispositif électronique étant configuré pour charger le logiciel depuis le dispositif de stockage lors du démarrage du dispositif électronique.

Le système selon l'invention peut présenter une ou plusieurs des caractéristiques ci-dessous, prises indépendamment ou selon toutes les combinaisons acceptables.

Le dispositif de stockage de données est configuré pour être connecté à un terminal utilisateur apte à installer un logiciel dans le dispositif de stockage de données.

Le dispositif de stockage de données est une clé USB, ou un disque dur, ou une mémoire de masse, ou une mémoire flash.

La version du logiciel enregistré dans le dispositif de stockage de données correspond à une version du logiciel requise pour assurer le bon fonctionnement du matériel ferroviaire.

Le dispositif de stockage de données comporte en outre des données de configuration.

Le connecteur de données comporte un connecteur USB.

Le matériel ferroviaire est un véhicule ferroviaire.

Le matériel ferroviaire est un équipement de voie ferroviaire.

Le matériel ferroviaire comporte plusieurs dispositifs de stockage de données et plusieurs dispositifs électroniques connectés aux dispositifs de stockage de données par des connecteurs de données.

Selon un autre aspect, l'invention concerne un procédé pour déployer un logiciel embarqué dans un système tel que décrit ci-dessus. Le procédé comporte des étapes consistant à :
- connecter un outil informatique externe au dispositif de stockage de données;
- par l'outil informatique externe, déployer un logiciel et/ou des données de configuration vers le dispositif de stockage de données ;
- démarrer le dispositif électronique ;
- par le dispositif électronique, charger le logiciel et/ou les données de configuration depuis le dispositif de stockage de données ;
- par le dispositif électronique, exécuter le logiciel chargé et/ou utiliser les données de configuration chargées.

### BREVE DESCRIPTION DES FIGURES

L'invention sera mieux comprise et d'autres avantages de celle-ci apparaîtront plus clairement à la lumière de la description qui va suivre d'un système de déploiement d'un logiciel dans un système électronique embarqué d'un matériel ferroviaire, cette description étant donnée uniquement à titre d'exemple et faite en référence aux dessins annexés, dans lesquels :
[Fig 1] la figure 1 est un schéma synoptique simplifié d'un système électronique embarqué d'un matériel ferroviaire conforme à un mode de réalisation de l'invention ;
[Fig 2] la figure 2 est un schéma simplifié d'un système de déploiement de logiciel dans le système de la figure 1 ;
[Fig 3] la figure 3 est un diagramme d'un exemple de fonctionnement d'un procédé de déploiement d'un logiciel dans un système électronique embarqué d'un matériel ferroviaire utilisant le système de la figure 2.

Pour décrire de manière claire et concise la présente invention, les dessins ne sont pas nécessairement à l'échelle et certaines caractéristiques peuvent être présentées sous une forme schématique.

### DESCRIPTION DETAILLEE DE MODES DE REALISATION

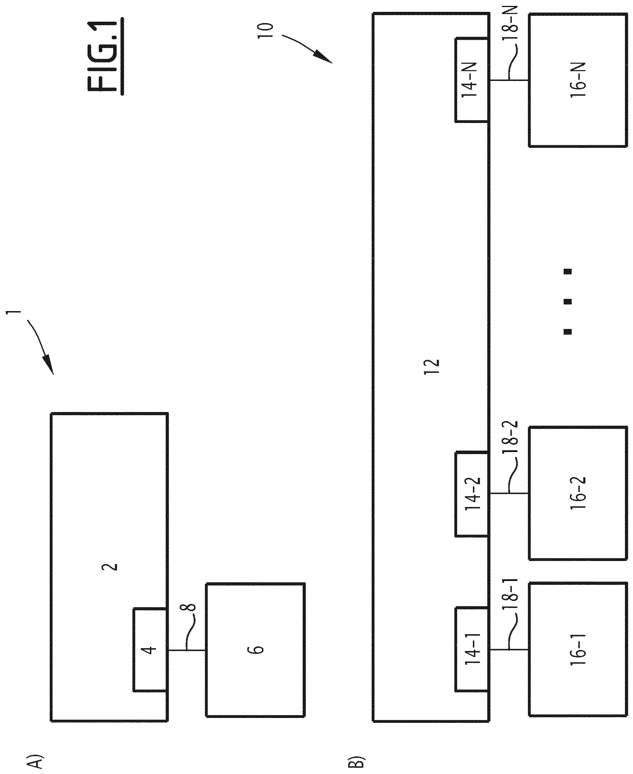

La figure 1, dans son insert A), représente un système électronique embarqué d'un matériel ferroviaire comprenant un logiciel embarqué.

Un système 1 comporte un matériel ferroviaire 2.

Par exemple, le matériel ferroviaire 2 est un véhicule ferroviaire, tel qu'un train, ou un élément de train tel qu'une voiture ou un wagon, ou une locomotive, ou une rame automotrice, ou un locotracteur, ou une draisine, ou un véhicule ferroviaire de transport urbain tel qu'un tramway, ou un métro, ou tout matériel roulant équivalent.

Le matériel ferroviaire 2 peut aussi être un matériel fixe, notamment un appareil associé à une voie ferrée, tel qu'un appareil de voie, notamment un aiguillage, ou un appareil de signalisation, ou une balise de signalisation, ou un capteur, tel qu'un capteur d'essieu, ou un appareillage électronique de contrôle utilisé dans un système de signalisation ferroviaire, ou dans un système d'informations voyageurs, ou dans un système de billettique, ou tout élément équivalent.

Le matériel ferroviaire 2 comporte un dispositif de stockage de données 4.

Le dispositif de stockage de données 4 est, de préférence, fixé à un châssis du matériel ferroviaire 2, ou à toute partie solidaire du matériel ferroviaire 2.

Par exemple, le dispositif de stockage de données 4 est une clé USB, ou un disque dur, ou une mémoire de masse, ou une mémoire flash ou similaire.

Le système 1 comporte également un dispositif électronique 6, tel qu'un contrôleur électronique ou un dispositif électronique de contrôle, qui est destiné à être associé au matériel ferroviaire 2.

Le dispositif électronique 6 comporte un processeur et une mémoire informatique interne.

Par exemple, le dispositif électronique 6 est une carte électronique sur circuit imprimé.

En pratique, le dispositif électronique 6 peut être utilisé pour piloter et/ou superviser tout ou partie des fonctions du matériel ferroviaire 2. En d'autres termes, le dispositif électronique 6 tient lieu de système électronique embarqué pour le matériel ferroviaire 2.

Le dispositif électronique 6 est distinct du dispositif de stockage de données 4. Il est par exemple construit sur une carte électronique distincte et séparée du dispositif de stockage de données 4.

Le dispositif électronique 6 comporte également un connecteur de données 8 apte à connecter le dispositif électronique 6 au dispositif de stockage de données 4 pour échanger des données entre le dispositif électronique 6 et le dispositif de stockage de données 4.

La figure 1, dans son insert B), représente un autre mode de réalisation d'un système 10 d'un matériel ferroviaire comprenant un logiciel embarqué, ce système 10 comprenant plusieurs logiciels dans plusieurs dispositifs électroniques embarqués d'un même matériel ferroviaire 12.

Les éléments de ce système sont similaires à ceux décrits précédemment pour le système 1.

Le matériel ferroviaire 12 comporte plusieurs dispositifs de stockage de données, notés consécutivement 14-1, 14-2 à 14-N sur la figure, N désignant un nombre entier qui représente le nombre de systèmes électroniques embarqués du matériel ferroviaire 12.

Le système 1 comporte également plusieurs dispositifs électroniques analogues au dispositif électronique 6. Ces dispositifs électroniques sont notés 16-1, 16-2 à 16-N sur la figure.

Selon la convention de nommage retenue dans la présente description et dans les figures, le dispositif électronique 16-1 est associé au dispositif de stockage de données 14-1, et ainsi de suite.

Les dispositifs électroniques 16-1, 16-2, à 16-N comportent chacun respectivement un connecteur de données 18-1, 18-2 à 18-N apte à connecter le dispositif électronique 16-1, 16-2 à 16-N correspondant au dispositif de stockage de données 14-1, 14-2 à 14-N correspondant pour échanger des données.

Selon la convention de nommage retenue dans la présente description et dans les figures, le connecteur de données 18-1 est associé au dispositif de stockage de données 14-1 et au dispositif électronique 16-1, et ainsi de suite.

La description qui va suivre sera poursuivie en se référant à l'exemple du système 1 décrit à l'insert A) de la figure 1, mais cette description peut être transposée à l'exemple du système 10 décrit à l'insert B) de la figure 1, ou à tout système équivalent.

Notamment, dans des variantes, plusieurs dispositifs de stockage de données 14-1, 14-2 à 14-N peuvent être connectés chacun à un ou à plusieurs dispositifs électroniques 16-1, 16-2, à 16-N par des connecteurs de données 18-1, 18-2 à 18-N et/ou plusieurs dispositifs électroniques 16-1, 16-2, à 16-N peuvent être connectés chacun à un ou à plusieurs dispositifs de stockage de données 14-1, 14-2 à 14-N par des connecteurs de données 18-1, 18-2 à 18-N.

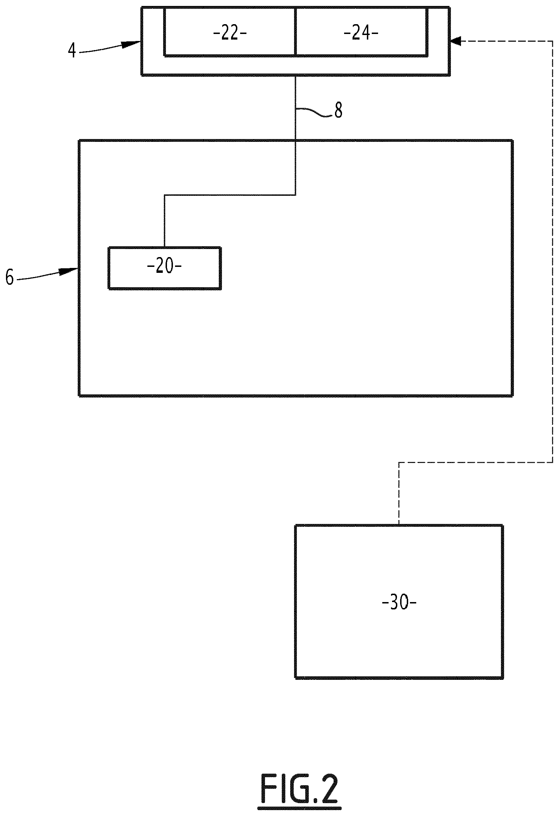

Comme illustré sur la figure 2, le dispositif électronique 6 comporte un processeur 20.

Par exemple, le processeur 20 est un microcontrôleur programmable, ou un microprocesseur. Selon des variantes, le processeur 20 pourrait être remplacé ou complété par un processeur de traitement du signal (DSP), ou par un composant logique reprogrammable (FGPA), ou par un processeur graphique (GPU), ou par un circuit intégré spécialisé (ASIC), ou par tout élément équivalent. En outre, des composants électroniques analogiques peuvent être combinés pour former un circuit électronique implémentant tout ou partie de ces fonctionnalités.

De préférence, le processeur 20 est couplé à une mémoire informatique, ou à tout support d'enregistrement de données lisible par ordinateur, qui comporte un produit programme d'ordinateur et/ou des instructions exécutables et/ou un code logiciel prévu pour assurer le fonctionnement d'une ou plusieurs fonctions du matériel ferroviaire 2 lorsque ces instructions sont exécutées par le processeur.

Cette mémoire informatique est ici formée par le dispositif de stockage de données 4.

Le dispositif de stockage de données 4 comporte, enregistré en mémoire, un logiciel 22 et, de préférence, des données de configuration 24. Par exemple, le logiciel 22, aussi nommé logiciel embarqué, comporte des instructions exécutables et/ou un code logiciel. Les données de configuration sont, par exemple, des paramètres définis par un utilisateur pour paramétrer le fonctionnement du matériel ferroviaire 2.

La version du logiciel 22 enregistré dans le dispositif de stockage de données 4 correspond à une version du logiciel requise pour assurer le bon fonctionnement du matériel ferroviaire 2.

Comme expliqué précédemment, un connecteur de données 8 est apte à connecter le dispositif électronique 6 au dispositif de stockage de données 4 pour autoriser un échange de données entre le dispositif électronique 6 et le dispositif de stockage de données 4 et plus particulièrement entre le processeur 20 du dispositif électronique 6 d'une part et le logiciel 22 et les données de configuration 24.

Ainsi, le dispositif de stockage de données 4 contient la version correcte du logiciel pour le ou les dispositif(s) électronique(s) 6 ainsi que leur configuration. Le dispositif de stockage de données 4 reste fixé en permanence au matériel ferroviaire 2.

Au contraire, le dispositif électronique 6 est fixé de façon amovible au matériel ferroviaire 2.

De préférence, le connecteur de données 8 comporte une liaison filaire.

Par exemple, le connecteur de données 8 comporte un connecteur USB (Universal Serial Bus) ou tout connecteur ou fiche de connexion filaire approprié.

Un aspect de l'invention consiste à conserver les données informatiques critiques (le logiciel embarqué 22 et les données de configuration 24) attachées au matériel ferroviaire 2 en permanence, séparément du dispositif électronique 6 qui, lui, peut être retiré pour être remplacé en cas de besoin, par exemple suite à une défaillance.

Le dispositif électronique 6 est notamment configuré pour charger le logiciel depuis le dispositif de stockage 4 lors du démarrage du dispositif électronique 6.

Ainsi, le dispositif électronique 6 fonctionne avec la bonne version sans qu'il ne soit nécessaire de mettre à jour une mémoire interne du dispositif électronique 6, notamment lorsqu'un nouveau dispositif électronique 6 est installé dans le matériel ferroviaire 2 ou lorsqu'un dispositif électronique 6 de remplacement est installé à la place d'un dispositif électronique 6 précédemment présent dans le matériel ferroviaire 2.

Il en va de même pour les données de configuration 24, qu'il n'est pas nécessaire de réécrire dans le dispositif électronique 6 lorsqu'un nouveau dispositif électronique 6 est installé dans le matériel ferroviaire 2.

Un outil informatique externe 30, tel qu'un terminal utilisateur, peut être utilisé pour déployer un logiciel dans le dispositif de stockage 4, c'est-à-dire pour installer un logiciel dans le dispositif de stockage 4 par exemple pour procéder à une mise à jour du logiciel 22.

L'outil informatique externe 30 peut aussi être utilisé pour télécharger des données de configuration 24 vers le dispositif de stockage 4, par exemple pour modifier des données de configuration existantes et/ou pour en ajouter de nouvelles.

L'outil informatique externe 30 peut être connecté au dispositif de stockage 4 par tout moyen utile, par exemple par une connexion filaire ou par une liaison de données sans fil.

Cependant, une telle intervention au moyen de l'outil informatique externe 30 n'est pas systématiquement nécessaire.

L'invention réduit la nécessité de procéder à de telles mises à jour à chaque fois que le dispositif électronique 6 est remplacé, puisque le logiciel reste de façon pérenne dans le dispositif de stockage 4 fixé au matériel ferroviaire 2 même lors d'un remplacement du dispositif électronique de stockage 6.

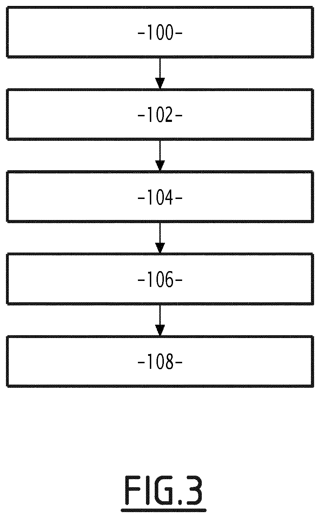

La figure 3 représente un exemple d'un procédé pour déployer un logiciel embarqué dans le système 1.

A l'étape 100, l'outil informatique externe 30 est connecté au dispositif de stockage 4.

A l'étape 102, l'outil informatique externe 30 déploie un logiciel 22 et/ou des données de configuration 24 vers le dispositif de stockage 4.

L'outil informatique externe 30 est ensuite déconnecté du dispositif de stockage 4.

Ensuite, lors de l'étape 104, le dispositif électronique 6 démarre.

Lors de l'étape 106, le dispositif électronique 6 charge le logiciel 22 depuis le dispositif de stockage 4.

Il s'agit alors de la bonne version du logiciel 22, c'est-à-dire d'une version du logiciel 22 spécifiquement configurée et/ou certifiée pour assurer le bon fonctionnement du matériel ferroviaire 2, par exemple pour implémenter une ou plusieurs fonctionnalités du matériel ferroviaire 2.

Le dispositif électronique 6 peut aussi charger les données de configuration 24 depuis le dispositif de stockage 4.

Enfin, à l'étape 108, le dispositif électronique 6 exécute le logiciel 22 chargé depuis le dispositif de stockage 4, éventuellement en utilisant les données de configuration 24 acquises à cette occasion.

Le procédé peut ensuite prendre fin.

Grâce à l'invention, les étapes 100 et 102 n'ont pas besoin d'être mises en oeuvre lors de chaque remplacement du dispositif électronique 6. Seules les étapes 104 à 108 sont alors mises en oeuvre, puisque le logiciel avec la bonne version est déjà stocké dans le dispositif de stockage 4, qui reste fixé au matériel ferroviaire 2 et qui n'est pas remplacé lors de chaque remplacement du dispositif électronique 6.

En variante, les étapes pourraient être exécutées dans un ordre différent. Certaines étapes pourraient être omises. L'exemple décrit ne fait pas obstacle à ce que, dans d'autres modes de réalisation, d'autres étapes soient mises en oeuvre conjointement et/ou séquentiellement avec les étapes décrites.

Les modes de réalisation et les variantes envisagés ci-dessus peuvent être combinés entre eux pour créer de nouveaux modes de réalisation, dans les limites définies par les revendications.

## Revendications

1. Système (1 ; 10) comportant un matériel ferroviaire (2 ; 12), au moins un dispositif de stockage de données (4 ; 14-1, 14-2, ..., 14-N) et au moins un dispositif électronique (6 ; 16-1, 16-2, ..., 16-N), le dispositif de stockage de données étant fixé au matériel ferroviaire, le dispositif de stockage de données comportant un logiciel (22) enregistré en mémoire pour assurer une ou plusieurs fonctions du matériel ferroviaire, le dispositif électronique étant fixé de façon amovible au matériel ferroviaire et étant connecté au dispositif de stockage de données par un connecteur de données (8 ; 18-1, 18-2, ..., 18-N), le dispositif électronique étant configuré pour charger le logiciel depuis le dispositif de stockage lors du démarrage du dispositif électronique.

2. Système selon la revendication 1, dans lequel le dispositif de stockage de données (4 ; 14-1, 14-2, ..., 14-N) est configuré pour être connecté à un terminal utilisateur (30) apte à installer un logiciel dans le dispositif de stockage de données.

3. Système selon l'une quelconque des revendications précédentes, dans lequel le dispositif de stockage de données (4 ; 14-1, 14-2, ..., 14-N) est une clé USB, ou un disque dur, ou une mémoire de masse, ou une mémoire flash.

4. Système selon l'une quelconque des revendications précédentes, dans lequel la version du logiciel (22) enregistré dans le dispositif de stockage de données (4 ; 14-1, 14-2, ..., 14-N) correspond à une version du logiciel requise pour assurer le bon fonctionnement du matériel ferroviaire (2 ; 12).

5. Système selon l'une quelconque des revendications précédentes, dans lequel le dispositif de stockage de données (4 ; 14-1, 14-2, ..., 14-N) comporte en outre des données de configuration (24).

6. Système selon l'une quelconque des revendications précédentes, dans lequel le connecteur de données (8) comporte un connecteur USB.

7. Système selon l'une quelconque des revendications précédentes, dans lequel le matériel ferroviaire (2 ; 12) est un véhicule ferroviaire.

8. Système selon l'une quelconque des revendications 1 à 6, dans lequel le matériel ferroviaire (2 ; 12) est un équipement de voie ferroviaire.

9. Système selon l'une quelconque des revendications précédentes, dans lequel le matériel ferroviaire (2 ; 12) comporte plusieurs dispositifs de stockage de données (14-1, 14-2, ..., 14-N) et plusieurs dispositifs électroniques (16-1, 16-2, ..., 16-N) connectés aux dispositifs de stockage de données par des connecteurs de données (8 ; 18-1, 18-2, ..., 18-N).

10. Procédé pour déployer un logiciel embarqué dans un système (1 ; 10) conforme à l'une quelconque des revendications précédentes, lequel comporte des étapes consistant à :
- connecter un outil informatique externe (30) au dispositif de stockage de données (4 ; 14-1, 14-2, ..., 14-N) ;
- par l'outil informatique externe (30), déployer un logiciel (22) et/ou des données de configuration (24) vers le dispositif de stockage de données (4 ; 14-1, 14-2, ..., 14-N) ;
- démarrer le dispositif électronique (6 ; 16-1, 16-2, ..., 16-N) ;
- par le dispositif électronique (6 ; 16-1, 16-2, ..., 16-N), charger le logiciel (22) et/ou les données de configuration (24) depuis le dispositif de stockage de données (4 ; 14-1, 14-2, ..., 14-N) ;
- par le dispositif électronique (6 ; 16-1, 16-2, ..., 16-N), exécuter le logiciel (22) chargé et/ou utiliser les données de configuration (24) chargées.
